# EUROPEAN PATENT APPLICATION

(11) **EP 4 811 716 A1**
(43) Date of publication of application: **23.09.2026**
(21) Application number: 25164337.5
(22) Date of filing: 18.03.2025
(51) Int. Cl.: H04L 9/06, H04L 9/08

(54) **AN INTEGRATED CIRCUIT FOR GENERATING DIGITAL DATA OF ANALOG SIGNALS AND FOR GENERATING A SIGNATURE CERTIFYING PROVENANCE OF THE DIGITAL DATA**

(71) Applicant: ETH Zurich, 8092 Zurich (CH)
(72) Inventor: FRANKE, Felix, 4055 Basel (CH); CARDES, Fernando, 4058 Basel (CH); YUAN, Xinyue, 8952 Schlieren (CH); BOUNIK, Raziyeh, 4056 Basel (CH)

(57) **Abstract**

A integrated circuit (1), comprises: an analog-to-digital converter section (14) which is configured to receive one or more analog signals and to convert the one or more analog signals into digital data; a cryptographic signature generator section (17) which is configured to generate a signature of the digital data, the signature being configured to certify provenance of the digital data from the integrated circuit (1); and a digital interface (16) which is configured to provide the digital data and the signature of the digital data.

## Description

### FIELD OF THE INVENTION

The present invention relates to an integrated circuit for generating digital data of analog signals and for generating a signature certifying provenance of the digital data.

### BACKGROUND ART

In the prior art, sensors are widely used to generate digital data of physical quantities, such as light, pressure, temperature, etc. For example, image sensors can generate photos or videos of a scene, pressure or temperature sensors can generate digital data of a pressure or temperature at a certain location, etc.

Digital recordings (such as photos, videos, audios, etc.) are among the main sources of information for journalists and the public, are routinely used in courts as evidence, and are a basis of scientific discoveries. Such digital recordings need to be interpreted - and must be trusted - by persons who did not participate in the recording of the data.

However, trust in digital recordings is eroding. As digital recordings are just sequences of bits (zeros and ones), they can be generated on arbitrary platforms, such as on general purpose computers. Furthermore, recent advances in artificial intelligence (Al) has simplified generating artificial digital recordings, namely fake recordings, which cannot be easily identified (or even not at all identified) as authentic or not. Thus, the mere existence of a digital recording is no longer a proof of authenticity, such as of an authentic photo of a scene.

The Coalition for Content Provenance and Authenticity (C2PA) has made contributions to solve this problem by developing an open technical standard to integrate trustworthy certificates in the metadata of digital files during the processing of already recorded and digitized data. Such an approach establishes verifiability of the processing chain and the subsequent data transmission and storage. However, to establish that the data originated in a physical device and was not generated by software, it is necessary to exclude that an attacker may feed fake data into the processing chain before the trust certificate is established.

Recording devices (such as smartphones, cameras, meteorological devices, etc.) are built by combining several integrated circuits (ICs). For example, a first IC can contain a CMOS camera (CMOS: Complementary Metal-Oxide-Semiconductor), a second IC can contain a microphone, a third IC can contain a microprocessor, etc. These ICs are constructed using dedicated technologies/nodes (i.e., specific semiconductor manufacturing processes) which are optimized for a particular application: a highspeed digital microprocessor can be implemented in nanometric technologies (such as 3nm), while a CMOS camera can be implemented in a coarser/older node (such as 90nm, 65nm, or a combination of several nodes). This design is most efficient in terms of cost and performance. Digital signature generation can be implemented in a digital microprocessor which is optimized for digital functions.

The connections between ICs pose severe security vulnerabilities. In a device such as a smartphone, ICs are interconnected using large metallic connections, which can be easily accessed by attackers with physical access to the device. For example, the attacker can remove the IC containing the CMOS camera, and inject into the digital processor signals representing an Al-generated image. By doing so, the attacker can obtain a valid signature of the Al-generated image (fake image), since the IC which generates the signature is not able to detect that the injected signals were not generated by the CMOS sensor/camera. While such an attack requires certain technical skills and possibly specialized equipment, it is well within the reach of any professional/person skilled in the art, and even in the reach of a hobbyist with some experience.

US2018097636A1 discloses an imaging system which may embed encrypted data into image data. The imaging system may generate image data in response to light received at a pixel array. The imaging system may include encryption circuitry that accesses an encryption key. The encryption circuitry may receive data related to the imaging system and/or to an environment in which an image is captured and encrypt the data using the encryption key. The imaging system may include data embedding circuitry that embeds the encrypted data into the image data to generate an output image. The components of the imaging system may be formed on a single imaging system chip. The encrypted data embedded in the output image may be extracted using an extraction engine and decrypted using a decryption engine and decryption key such that the data may be accessed by a user with access to the decryption key.

US2021090202A1 discloses a system which may include an imaging system coupled to a host subsystem. The imaging system may include an image sensor that provides image frames to the host subsystem. The image sensor may include a data authentication subsystem that appends corresponding authentication data to each of the image frames. Each set of authentication data may be generated based on a subset of the image frame data (e.g., corresponding to image data generated by pixels defined by a sparse region-of-interest within the pixel array). The host subsystem may securely provide region-of-interest parameters to the image sensor to update the sparse region-of-interest in an adaptive manner to account for factors such as computational load of the host subsystem and authentication coverage for the entire pixel array.

WO9824186A2 discloses an imaging device integrating a photo sensing array, an analog-to-digital converter, and an encryption section on a single substrate. The optical image can be directly converted into encrypted digital data prior to transmission of the image off the chip.

US20030204736A1 discloses certifying photographs, videographs and audio recordings. A unique private encryption key may be associated with the recording device, which, for video may be a digital camera, or for audio recordings, a digital audio recording device. The digital photographic, videographic or audio data may then be encrypted by the recording device in essentially real-time and stored in encrypted form. The rendering of the digital photograph, videograph or digital audio signal into a perceptible form, may be effected by recovery of the corresponding "public" decryption key from the manufacturer of the recording device, and the stored encrypted data may be decrypted after retrieval from the storage device. The decryption key may, for example, be made available by the manufacturer on a web site.

US7216232B1 discloses inserting a digital signature into digital data. The digital data has bits and the method includes the steps of: assigning predetermined bits of the digital data for receiving the digital signature; signing the digital data excluding the predetermined bits resulting in the digital signature; and inserting the digital signature into the predetermined bits of the digital data for subsequent authentication of the digital data. Also provided is a method for authenticating digital data having the embedded digital signature in the predetermined bits of the digital data including the steps of: extracting the digital signature from the predetermined bits; decrypting the digital signature from the digital data resulting in a first hash; applying a known one-way hashing function used by an encoder of the digital data to the digital data excluding the predetermined bits resulting in a second hash; and comparing the first hash to the second hash wherein if the first hash matches the second hash the digital data is authentic. In a preferred version of the methods of the present invention, the method further includes the step of inserting associated data into the digital data prior to the signing step such that the digital signature authenticates both the associated data as well as the digital data. Preferably, the associated data is inserted into the bits of the digital data excluding the predetermined bits.

### DISCLOSURE OF THE INVENTION

There may be a need for an integrated circuit for generating digital data of analog signals and for generating a signature certifying provenance of the digital data which does not have at least some of the disadvantages of the prior art. In particular, there may be a need for an integrated circuit for generating digital data of analog signals and for generating a signature certifying provenance of the digital data with increased robustness against physical attacks. In particular, there may be a need for an integrated circuit for generating digital data of analog signals and for generating a signature certifying provenance of the digital data with less power and area consumption. In particular, there may be a need for an integrated circuit for generating digital data of analog signals and for generating a signature certifying provenance of the digital data with increased compatibility with modern sensors. In particular, there may be a need for an integrated circuit for generating digital data of analog signals and for generating a signature certifying provenance of the digital data with increased robustness against sensor manufacturer attacks. In particular, there may be a need for an integrated circuit for generating digital data of analog signals and for generating a signature certifying provenance of the digital data with improved end-user privacy.

Such a need may be met with the subject-matter of the independent claims. Advantageous embodiments are defined in the dependent claims.

Ideas underlying embodiments of the present invention may be interpreted as being based, inter alia, on the following observations and recognitions.

An aspect of the invention relates to an integrated circuit, which comprises: an analog-to-digital converter section which is configured to receive one or more analog signals and to convert the one or more analog signals into digital data; a cryptographic signature generator section which is configured to generate a signature of the digital data, the signature being configured to certify provenance of the digital data from the integrated circuit; and a digital interface which is configured to provide the digital data and the signature of the digital data. The digital data and the signature are available on the digital interface of the integrated circuit, wherein the signature certifies provenance of the digital data from the integrated circuit. Security is high, because an attacker does not have physical access to the functionality of the cryptographic signature generator section. Complexity/area consumption/power consumption of the integrated circuit can be kept low, because the cryptographic signature generator section can be designed with low complexity/area consumption/power consumption.

The digital interface can include pads, wirebonding pads, bonding elements, flip-chip bonding elements, etc. which are configured to transmit and/or receive electrical signals. The digital interface can include an optical transceiver which is configured to transmit and/or receive optical signals. The digital interface can include a wireless transceiver which is configured to transmit and/or receive wireless signals (radiofrequency signals).

The digital data and/or the signature of the digital data can be provided on the digital interface in a reformatted form, encrypted form, packet-split form, signal-modulated form, etc. For example, the signature can be uploaded to a public blockchain, or can be integrated with the C2PA standard. A verification algorithm running in the cloud can enable to verify whether a signature is valid, etc.

In an embodiment, the cryptographic signature generator section is configured to generate the signature using a secret message. The secret message does not need to be stored on-chip. The secret message can be generated dynamically on-chip, using for example a seed. Generating the message can be obfuscated in such a way that even if an attacker finds a way to physically access the cryptographic signature generator section, estimating the secret message is difficult or impossible.

In an embodiment, the secret message is stored in a secret message section of the integrated circuit. A simple embodiment is enabled.

In an embodiment, the cryptographic signature generator section includes a one-way function section which is configured to generate the signature by applying a one-way function to a combination of the digital data and a secret message. The one-way function can have a robust design, and relate to for example a CRC, a hash function such as SHA-256, etc.

In an embodiment, the cryptographic signature generator section includes a one-way function section which is configured to generate the signature by applying a one-way function to a combination of the digital data and a secret message which is generated by a physically unclonable function section. Robustness is increased.

In an embodiment, the cryptographic signature generator section includes a one-way function section which is configured to generate the signature by applying a one-way function to a combination of the digital data and a secret message which is generated by a pseudo-random number generator section which receives a secret seed generated by a physically unclonable function section.

In an embodiment, the cryptographic signature generator section includes a one-way function section which is configured to generate the signature by applying a one-way function to the result of a data formatting section which is configured to combine the digital data and one or more of external data received via a data handling section, at least one previous signature and/or a hash obtained from previous digital data, and the result of a device monitor section which provides information relating to one or more of a clock frequency, a supply voltage, a temperature, an analog-to-digital setting, and a number of generated signatures. The secret message is dynamically generated in a manner which is difficult for an attacker to break even in case of having access to the cryptographic signature generator section, thereby increasing robustness.

In an embodiment, the external data relates to one or more of a time at which the digital data was recorded, a location at which the digital data was recorded, and one or more signatures of one or more sensors generating the analog signals. Robustness is increased.

In an embodiment, the cryptographic signature generator section includes an encryption section which is configured to generate the signature using encryption and one or more of a private key, a user's private key, a private key of a private key/public key pair generated by a key generator section additionally included in the integrated circuit. An encrypted digital signature can be provided on the digital interface of the integrated circuit, thereby increasing robustness.

In an embodiment, the integrated circuit further includes a data handling section connected between the analog-to-digital converter section and the digital interface, and/or between the cryptographic signature generator section and the digital interface, the data handling section being configured to provide the digital data and/or the signature on the digital interface, the data handling section being optionally configured to perform one or more of formatting functions, postprocessing functions and storage functions of the digital data and/or the signature. The digital data and the signature of the digital data can be provided on the digital interface with a predefined format. Postprocessing functions can relate to filtering, compression, analysis, etc.

In an embodiment, the integrated circuit is further configured to dynamically update one or more of a secret message and a one-way function, in particular after lapse of a predetermined time interval, or after a predetermined number of signatures generated, or depending on a content of the digital data, or randomly. Robustness is further increased, in particular for attacks aimed at studying correlations between input and output of the cryptographic signature generator section using test data. By dynamical updates, such attacks become drastically more complex. Dynamic update can relate to selecting one out of a plurality of secret messages, to selecting a secret messages or one-way function, or private key using the digital data. The content of the digital data can relate to one or more bits of the digital data, such as the last bit of the digital data.

An aspect of the invention relates to a device, in particular an image sensor, a microphone, a chemical sensor, or a communication system, having included an integrated circuit according to the present invention. The integrated device according to the present invention has various applications.

An aspect of the invention relates to a arrangement of two or more integrated circuits according to the present invention connected to a processor integrated circuit. Interoperation between several integrated circuits, such as sharing digital signatures, is enabled.

An aspect of the invention relates to a method of operating an integrated circuit. The method comprises: receiving at the integrated circuit one or more analog signals and converting the one or more analog signals into digital data; generating a signature of the digital data, the signature being configured to certify provenance of the digital data from the integrated circuit; and providing the digital data and the signature of the digital data on a digital interface of the integrated circuit.

In an embodiment, the signature is generated by applying a one-way function to a combination of the digital data and a secret message.

### BRIEF DESCRIPTION OF THE DRAWINGS

In the following, advantageous embodiments of the invention will be described with reference to the enclosed drawings. However, neither the drawings nor the description shall be interpreted as limiting the invention.
Fig. 1 schematically shows an integrated circuit according to the prior art for generating digital data from analog signals.
Fig. 2 schematically shows an embodiment of an integrated circuit according to the present invention for generating digital data from analog signals and for generating a signature certifying provenance of the digital data.
Figs. 3-8 schematically show embodiments of integrated circuits according to the present invention.
Fig. 9 schematically shows an arrangement of two integrated circuits according to the present invention.
Fig. 10 schematically shows possible method steps according to the present invention for operating an integrated circuit.

The figures are only schematic and not to scale. Same reference signs refer to same or similar features.

### MODE(S) FOR CARRYING OUT THE INVENTION

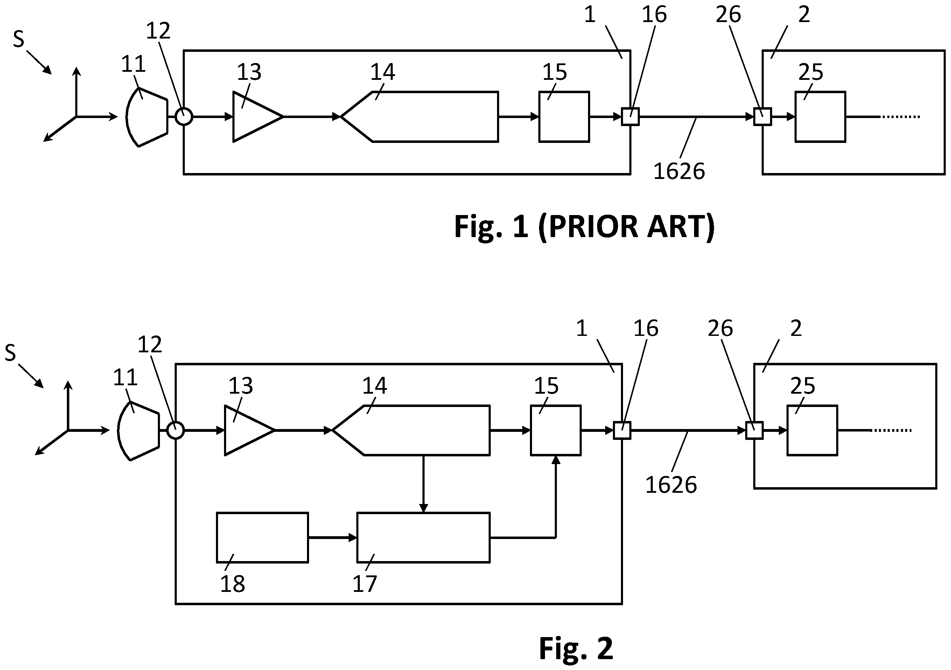

Fig. 1 schematically shows an integrated circuit 1 according to the prior art for generating digital data from analog signals.

As illustrated in Fig. 1, a sensing unit 11 is configured to generate an analog signal proportional to a physical magnitude of a scene S. The physical magnitude can relate to a light intensity, a pressure, a temperature, etc. The sensing unit 11 can have the form of a transducer. The sensing unit 11 can relate to a light intensity sensing device such as a photodiode, a pressure sensing device such as a piezoelectric device, a temperature sensing device such as a thermistor, etc. The sensing unit 11 can be configured to generate a plurality of analog signals proportional to a physical magnitude of a scene S. The sensing unit 11 can relate to an image sensor which is configured to generate analog signals reflecting light intensities of the scene S.

As illustrated in Fig. 1, the sensing unit 11 is connected to an analog interface 12 of the integrated circuit 1. The analog interface 12 can relate to one or more pads, bonding elements, etc. for receiving electrical signals. The analog interface 12 is configured to receive one or more analog signals from the sensing unit 11.

As illustrated in Fig. 1, the analog interface 12 is connected to a signal conditioning section 13. The signal conditioning section 13 can include amplifiers, filters, etc. for amplifying, filtering, etc. the one or more analog signals of the sensing unit 11.

As illustrated in Fig. 1, the signal conditioning section 13 is connected to an analog-to-digital converter section 14. The analog-to-digital converter section 14 is configured to receive one or more analog signals from the signal conditioning section 13 and to generate digital data from the one or more analog signals. The analog-to-digital converter section 14 can include one or more analog-to-digital converters which are configured to receive the one or more analog signals from the signal conditioning section 13 and to convert the analog signals into digital data. For example, the analog-to-digital converter section 14 can include a single analog-to-digital converter for converting analog signals into digital data by serially sampling and converting the analog signals. For example, the analog-to-digital converter section 14 can include a plurality of analog-to-digital converters for converting a plurality of analog signals into digital data in parallel. The analog-to-digital converter section 14 can include a data storage and formatting circuitry which is configured to provide the digital data in a predefined/desired format. The digital data can relate to one or more of a digital photo of the scene S, to a digital video of the scene S, to a digital audio of the scene S, to a digital temperature recorded at the scene S, etc.

As illustrated in Fig. 1, the analog-to-digital converter section 14 is connected to a data handling section 15, which is connected to a digital interface 16 of the integrated circuit 1. At the digital interface 16, the digital data can be accessed.

As illustrated in Fig. 1, the integrated circuit 1 is connected via an off-chip interconnection 1626 to a digital interface 26 of a processor integrated circuit 2, such as a microprocessor. The digital data can be transmitted via the off-chip interconnection 1626 from the integrated circuit 1 to the processor integrated circuit 2. The digital interface 26 of the processor integrated circuit 2 is connected to a pre-processing section 25, which is connected to further elements (not shown) of the processor integrated circuit 2 for further processing, storage, transmission, etc. of the digital data.

Fig. 2 schematically shows an embodiment of an integrated circuit 1 according to the present invention for generating digital data of analog signals and for generating a signature certifying provenance of the digital data.

As illustrated in Fig. 2, the integrated circuit 1 receives via an analog interface 12 one or more analog signals from a signal sensing unit 11 as described above. The integrated circuit 1 includes a signal conditioning section 13, an analog-to-digital converter section 14, a data handling section 15 and a digital interface 16 as described above. Furthermore, the integrated circuit 1 includes a cryptographic signature generator section 17. The cryptographic signature generator section 17 is configured to receive digital data from the analog-to-digital converter section 14 and to generate a signature of the digital data certifying provenance of the digital data. For example, as illustrated in Fig. 2, the integrated circuit 1 can include a secret message section 18 which stores a secret message. The cryptographic signature generator section 17 can be configured to receive the secret message from the secret message section 18 and to generate the signature of the digital data using the secret message. The cryptographic signature generator section 17 is connected to the data handling section 15. The cryptographic signature generator section 17 is configured to transmit the signature of the digital data to the data handling section 15. The data handling section 15 is configured to receive the signature of the digital data and to provide the signature of the digital data and the digital data received from the analog-to-digital converter section 14 on the digital interface 16. At the digital interface 16, the digital data of the analog signals and the signature of the digital data can be retrieved/accessed. The signature of the digital data is configured to certify provenance of the digital data from the integrated circuit 1. As illustrated in Fig. 2, the digital data and the signature of the digital data can be transmitted via the off-chip interconnection 1626 to the processor integrated circuit 2 for further processing, storage, transmission, etc.

In some embodiments, the data handling section 15 can be missing or can be arranged off-chip. For example, the analog-to-digital converter section 14 and the cryptographic signature generator section 17 can each be connected to the digital interface 16 and can each be configured to provide the digital data respectively the signature on digital interface 16.

In some embodiments, the signal conditioning section 13 can be missing or can be arranged off-chip. For example, the sensing unit 11 can be configured to provide analog signals having properties which enable direct transmission of the analog signals to the analog-to-digital converter section 14. For example, the sensing unit 11 can include a signal conditioning section. For example, both the integrated circuit 1 and the sensing unit 11 can include respective signal conditioning sections, each at least partially conditioning the analog signals.

In some embodiments, the integrated circuit 1 includes the sensing unit 11, thereby making obsolete the analog interface 12.

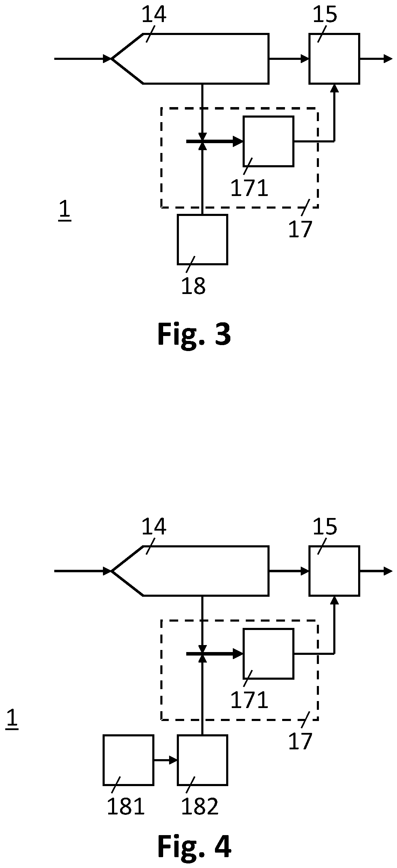

Figs. 3-8 schematically show embodiments of integrated circuits 1 according to the present invention. An analog-to-digital converter section 14 is configured to receive one or more analog signals, to convert the analog signals into digital data and to transmit the digital data to a data handling section 15 and to a cryptographic signature generator section 17. The cryptographic signature generator section 17 is configured to receive the digital data. As described in further detail below, the cryptographic signature generator section 17 is configured to generate a signature of the digital data and to transmit the signature to the data handling section 15. The data handling section 15 is configured to provide the digital data and the signature of the digital data to a digital interface 16 (not shown in Fig. 3-8).

In the embodiment schematically shown in Fig. 3, the cryptographic signature generator section 17 is connected to a secret message section 18. The secret message section 18 can have stored a secret message, for example in a non-volatile memory, and can be configured to transmit the secret message to the cryptographic-signature generator section 17. The cryptographic signature generator section 17 includes a one-way function section 171, which is configured to combine the digital data received from the analog-to-digital converter section 14 and a secret message received from the secret message section 18 and to generate a signature of the digital data. The one-way function section 171 is described in more detail below.

In the embodiment schematically shown in Fig. 4, the cryptographic signature generator section 17 is connected to a pseudo-random-number generator section 182. The pseudo-random-number generator section 182 is connected to a physically unclonable function section 181. The physically unclonable function section 181 is configured to generate a secret seed. The secret seed can relate to a device-specific sequence, which is generated, for example, on power up. For example, the secret seed can be used as a secret message which is transmitted to the cryptographic signature generator section 17 (not shown in Fig. 4). For example, the secret seed can be transmitted to the pseudo-random-number generator section 182, as shown in Fig. 4, which generates a secret message using the secret seed. The cryptographic signature generator section 17 includes a one-way function section 171, which is configured to combine the digital data received from the analog-to-digital converter section 14 and a secret message received from the pseudo-random number generator 182, as shown in Fig. 4, or from the physically unclonable function section 181 (not shown in Fig. 4), and to generate a signature of the digital data. For the case of only a physically unclonable function section 181 (not shown in Fig. 4), the secret message can be estimated off-chip by the chip manufacturer, who can study the properties of the physically unclonable function section 181 after device fabrication. For the case of a random-number generator section 182 which receives a secret seed from the physically unclonable function section 181 (as shown in Fig. 4), the secret message is almost impossible to be estimated by an attacker, since the secret seed vanishes from the device as it is powered off. In both cases (with and without a pseudo-random-number-generator 182), the manufacturer (or the assembly company, or some other trustworthy entity) needs to characterize the physically unclonable function to be able to distinguish valid from invalid signatures. And in both cases, an attacker (if different from that trustworthy entity) will find it difficult to inspect the device and retrieve the number generated by the physically unclonable function section 182, as this vanishes when powered off. The pseudo-random-number generator 182 adds complexity to the secret message, since the output of the physically unclonable function section 182 may not be complex/long enough to be secure against certain types of analysis/attacks, like brute forcing.

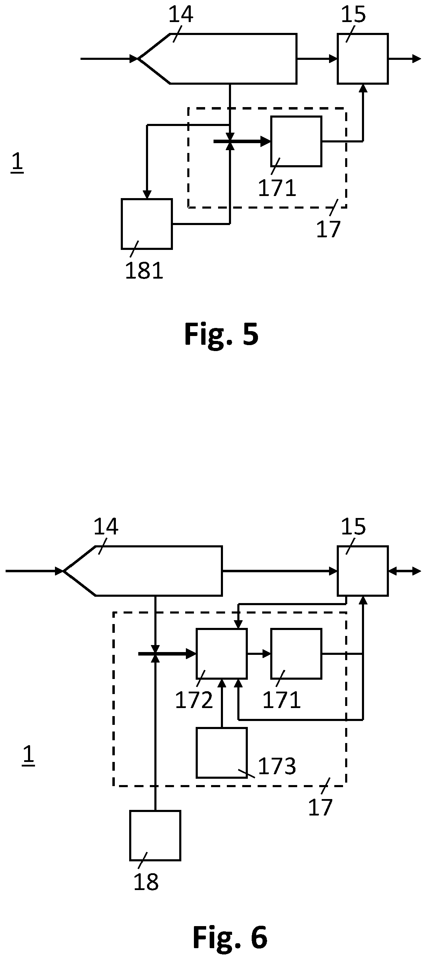

In the embodiment schematically shown in Fig. 5, the cryptographic signature generator section 17 is connected via a line for transmitting the digital data to a physically unclonable function section 181 and via a line for receiving a secret message from the physically unclonable function section 181. The cryptographic signature generator section 17 is configured to transmit digital data to the physically unclonable function section 181, which is configured to use digital data as a challenge to generate a secret message, which is transmitted to the cryptographic signature generator section 17. Accordingly, the secret message is generated on-chip dynamically, thereby making the secret message variable over time. The physically unclonable function section 181 can use other or additional variable signals as a challenge to generate the secret message. The cryptographic signature generator section 17 includes a one-way function section 171, which is configured to combine the digital data received from the analog-to-digital converter section 14 and a secret message received from the physically unclonable function section 181 and to generate a signature of the digital data.

In the embodiment schematically shown in Fig. 6, the cryptographic signature generator section 17 is connected to the analog-to-digital section 14 for receiving the digital data and to the data handling section 15 for receiving via a digital interface 16 (not shown in Fig. 6) external data (e.g. for timestamping and/or handshaking with other integrated circuits or sensors generating the analog signals, e.g. an image sensor handshaking with a microphone) via the data handling section 15. The cryptographic signature generator section 17 includes a one-way function section 171 which is configured to generate the signature by applying a one-way function to the result of a data formatting section 172. As schematically shown in Fig. 6, the data formatting section 172 is configured to combine the digital data, a secret message of a secret message section 18, external data received via the data handling section 15, at least one previous signature and/or a result of a device monitor section 173. The device monitor section 173 can be configured to provide information relating to a clock frequency, a supply voltage, a temperature, an analog-to-digital setting, a number of generated signatures, etc.

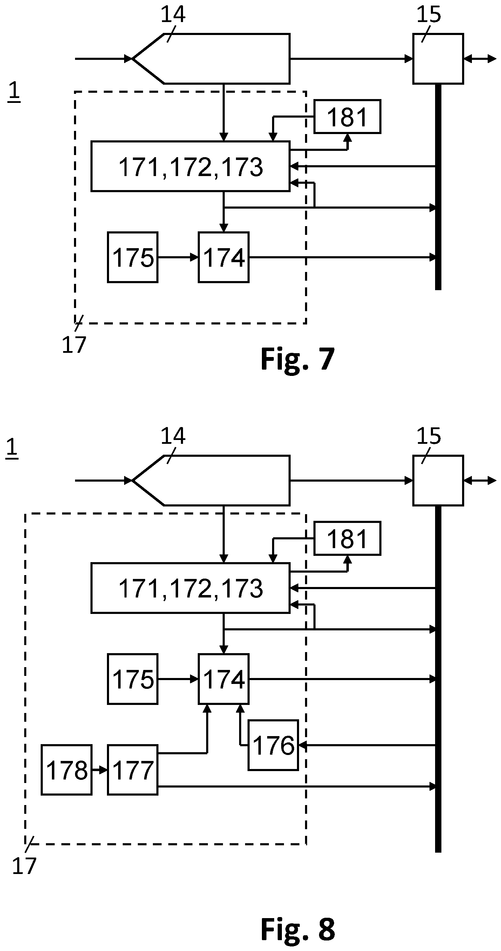

In the embodiment schematically shown in Fig. 7, the cryptographic signature generator section 17 receives the digital data from the analog-to-digital converter section 14. The cryptographic signature generator section 17 includes a one-way function section 171, a data formatting section 172, and a device monitor section 173, which are configured to generate the signature by combining the digital data, a secret message from a physically unclonable function section 181, external data received via the data handling section 15, at least one previous signature and/or a result of the device monitor section 173, and to transmit the signature to the data handling section 15 and an encryption section 174. The encryption section 174 is configured to receive a private key from a private key section 175, to encrypt the signature using the private key, and to transmit the encrypted signature to the data handling section 15. Accordingly, an encrypted signature is provided on the digital interface 16 of the integrated circuit 1, which is encrypted with the private key of the private key section 175. The private key is preferably securely stored in a memory of the private key section 175.

In the embodiment schematically shown in Fig. 8, the cryptographic signature generator section 17 corresponds to the cryptographic key generator section 17 of the embodiment schematically shown in Fig. 7. Contrary to the embodiment of Fig. 7, the encryption section 174 is configured to receive a private key from a private key section 175, an on-chip generated private key from an on-chip generated key section 177, and/or a user's private key from a user's private key section 176 to encrypt the signature using the private key, the on-chip generated private key and/or the user's private key, and to transmit the encrypted signature to the data handling section 15, such that the encrypted signature is provided on the digital interface 16 of the integrated circuit 1. The user's private key of the user's private key section 176 can be received via the data handling section 15 and can relate to a private key which is only known to the user of the integrated circuit 1. As illustrated in Fig. 8, the on-chip generated key section 177 can receive an on-chip generated private key/public key pair from a key generator section 178 which is configured to dynamically generate a private key/public key pair using for example a physically unclonable function. The on-chip generated key section 177 is configured to transmit the on-chip generated private key to the encryption section 174 and the on-chip generated public key to the data handling section 15. Accordingly, the on-chip generated public key is provided on the digital interface 16 of the integrated circuit 1. The on-chip generated private key/public key are not stored in non-volatile memory.

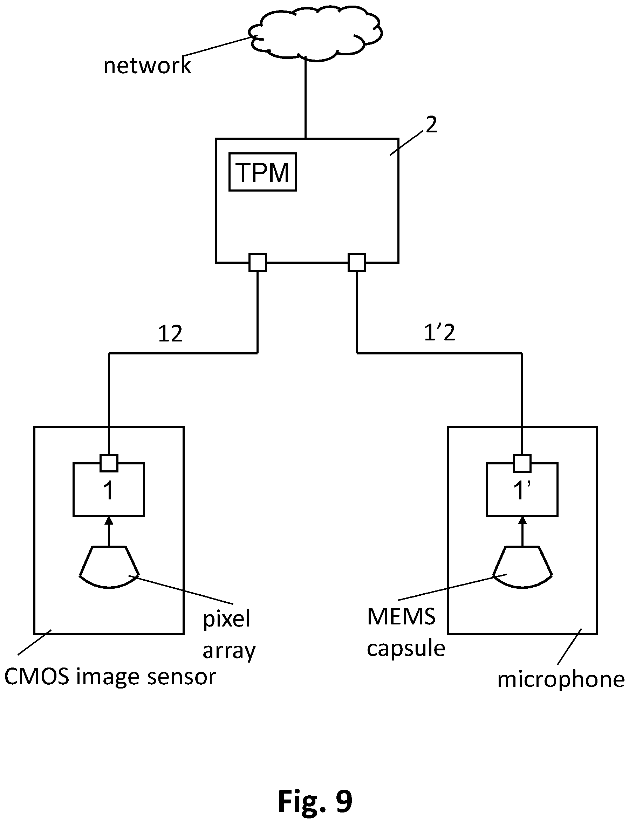

Fig. 9 schematically shows an arrangement of two integrated circuits 1, 1' according to the present invention. A first integrated circuit 1 according to the present invention can relate to a CMOS image sensor, wherein the first integrated circuit 1 is connected to a pixel array. A second integrated circuit 1' according to the present invention can relate to a microphone, wherein the second integrated circuit 1' is connected to a MEMS microphone capsule. The first integrated circuit 1 is configured to convert the analog signals from the pixel array into digital data and to generate a digital signature of the digital data and to provide the digital data and the signature of the digital data on a digital interface 16 of the first integrated circuit 1. The second integrated circuit 1' is configured to convert the analog signals from the MEMS microphone capsule into digital data and to generate a digital signature of the digital data and to provide the digital data and the signature of the digital data on a digital interface 16 of the second integrated circuit 1'. The first integrated circuit 1 is connected via a line 12 to a processor integrated circuit 2, for example via a MIPI CS2 interface (MIPI: Mobile Industry Processor Interface; CS2: Camera Serial Interface 2). The second integrated circuit 1' is connected via a line 1'2 to the processor integrated circuit 2, for example via a MIPI SoundWire interface. The signatures generated by the integrated circuits 1, 1' can be inserted mutually as external data into the signatures of each integrated circuit 1, 1', making it possible to prove that both integrated circuits 1, 1' were capturing the digital data almost simultaneously, with negligible latency. Both groups of signatures can be then shared through a network, for example by publishing them on a public blockchain.

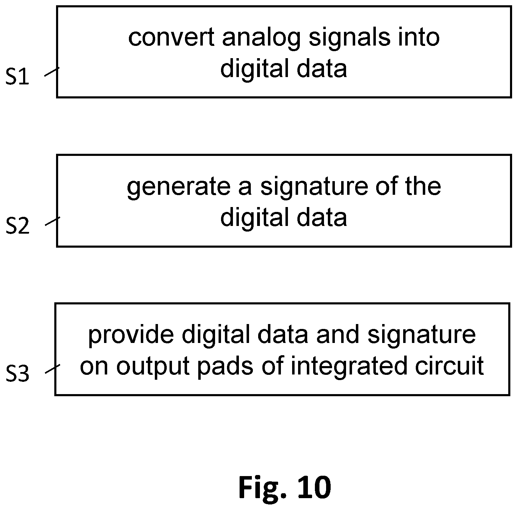

Fig. 10 schematically shows possible method steps according to the present invention for operating an integrated circuit 1. In step S1, one or more analog signals are received at the integrated circuit 1 and the one or more analog signals are converted into digital data. In step S2, a signature of the digital data is generated, the signature being configured to certify provenance of the digital data from the integrated circuit 1. In step S3, the digital data and the signature of the digital data are provided on a digital interface 16 of the integrated circuit 1.

In some embodiments, the one-way function section 17 can relate to a CRC function section (CRC: Cyclic Redundancy Check), a hash function section which implements a hash function of for example the SHA-1 family, SHA-2 family etc. (SHA: Secure Hash Algorithm), such as SHA-256, SHA-512, etc., MD5 (Message Digest Algorithm 5) or similar, etc. Good results can be achieved using SHA-2 family hash functions.

In some embodiments, the encryption section 174 can relate to a RSA encryption algorithm (RSA: Rivest-Shamir-Adleman), ECC (elliptic curve cryptography), DSA (digital signature algorithm), etc. In the present disclosure, the term 'encryption' does not only restrict to classical encryption algorithms.

In some embodiments, the secret message section 18 can relate to a non-volatile memory, a pseudo-random number generator, a RoT (hardware root of trust), a digital code installed in the integrated circuit during manufacturing, a PUF (physical unclonable function), etc.

In some embodiments, the physically unclonable function section 181 can relate to a delay-based PUF, such as a ring oscillator based PUF; a memory-based PUF, such as a SRAM-PUF (SRAM: static random-access memory), a PUF which includes error-correction circuitry, etc.

In some embodiments, the pseudo-random-number generator section 182 can relate to a LFSR (linear Feedback Shift Register), etc.

In some embodiments, the integrated circuit 1 can relate to a microelectronic circuit, a semiconductor device, a CMOS device, a BJT device (BJT: bipolar junction transistor), BiCMOS device (BiCMOS: bipolar CMOS), a photonic integrated circuit, etc.

In some embodiments, the sensing unit 11 can relate to a MEMS device (MEMS: Micro Electro Mechanical System), a microelectronic circuit, a semiconductor device, a CMOS device, a BJT device (BJT: bipolar junction transistor), BiCMOS device (BiCMOS: bipolar CMOS), a photonic integrated circuit, etc.

Finally, it should be noted that the term "comprising" does not exclude other elements or steps and the "a" or "an" does not exclude a plurality. Also, elements described in association with different embodiments may be combined. It should also be noted that reference signs in the claims should not be construed as limiting the scope of the claims.

**LIST OF REFERENCE SIGNS**

| | | | |
|---|---|---|---|
| 1 | integrated circuit | | |
| 11 | sensing unit | 12 | analog interface |
| 13 | signal conditioning section | 14 | analog-to-digital converter section |
| 15 | data handling section | | |
| 16 | digital interface of integrated circuit | | |
| 17 | cryptographic signature generator section | | |
| 18 | secret message section | | |
| 2 | processor integrated circuit | | |
| 26 | digital interface of processor integrated circuit | | |
| 25 | pre-processing section | | |
| 1626 | off-chip interconnection | | |
| 171 | one-way function section | 172 | data formatting section |
| 173 | device monitor section | 174 | encryption section |
| 175 | private key | 176 | user's private key |
| 177 | on-chip generated private key/public key pair | | |
| 178 | key generator section | | |
| 181 | physically unclonable function section | | |
| 182 | pseudo-random number generator section | | |

## Claims

1. An integrated circuit (1), comprising:
an analog-to-digital converter section (14) which is configured to receive one or more analog signals and to convert the one or more analog signals into digital data,
a cryptographic signature generator section (17) which is configured to generate a signature of the digital data, the signature being configured to certify provenance of the digital data from the integrated circuit (1),
a digital interface (16) which is configured to provide the digital data and the signature of the digital data.

2. The integrated circuit (2) according to claim 1, wherein the cryptographic signature generator section (17) is configured to generate the signature using a secret message.

3. The integrated circuit (2) according to claim 2, wherein the secret message is stored in a secret message section (18) of the integrated circuit (1).

4. The integrated circuit (2) according to one of claims 1 to 3, wherein the cryptographic signature generator section (17) includes a one-way function section (171) which is configured to generate the signature by applying a one-way function to a combination of the digital data and a secret message.

5. The integrated circuit according to one of claims 1 to 4, wherein the cryptographic signature generator section (17) includes a one-way function section (171) which is configured to generate the signature by applying a one-way function to a combination of the digital data and a secret message which is generated by a physically unclonable function section (181).

6. The integrated circuit according to one of claims 1 to 4, wherein the cryptographic signature generator section (17) includes a one-way function section (171) which is configured to generate the signature by applying a one-way function to a combination of the digital data and a secret message which is generated by a pseudo-random number generator section (182) which receives a secret seed generated by a physically unclonable function section (181).

7. The integrated circuit (1) according to one of claims 1 to 6, wherein the cryptographic signature generator section (17) includes a one-way function section (171) which is configured to generate the signature by applying a one-way function to the result of a data formatting section (172) which is configured to combine the digital data and one or more of external data received via a data handling section (15), at least one previous signature and/or a hash obtained from previous digital data, and the result of a device monitor section (173) which provides information relating to one or more of a clock frequency, a supply voltage, a temperature, an analog-to-digital setting, and a number of generated signatures.

8. The integrated circuit (1) according to claim 7, wherein the external data relates to one or more of a time at which the digital data was recorded, a location at which the digital data was recorded, and one or more signatures of one or more sensors generating the analog signals.

9. The integrated circuit (1) according to one of claims 1 to 8, wherein the cryptographic signature generator section (17) includes an encryption section (174) which is configured to generate the signature using encryption and one or more of a private key (175), a user's private key (176), and a private key of a private key/public key pair (177) generated by a key generator section (178) additionally included in the integrated circuit (1).

10. The integrated circuit (1) according to one of claims 1 to 9, further including a data handling section (15) connected between the analog-to-digital converter section (14) and the digital interface (16), and/or between the cryptographic signature generator section (17) and the digital interface (16), the data handling section (15) being configured to provide the digital data and/or the signature on the digital interface (16), the data handling section (15) being optionally configured to perform one or more of formatting functions, postprocessing functions and storage functions of the digital data and/or the signature.

11. The integrated circuit (1) according to one of claims 1 to 10, further configured to dynamically update one or more of a secret message and a one-way function, in particular after lapse of a predetermined time interval, or after a predetermined number of signatures generated, or depending on a content of the digital data, or randomly.

12. A device, in particular an image sensor, a microphone, a chemical sensor, or a communication system, having included an integrated circuit (1) according to one of claims 1 to 11.

13. An arrangement of two or more integrated circuits (1, 1', ...) according to one of claims 1 to 11 connected to a processor integrated circuit (2).

14. A method of operating an integrated circuit (1), the method comprising:
receiving (S1) at the integrated circuit (1) one or more analog signals and converting the one or more analog signals into digital data,
generating (S2) a signature of the digital data, the signature being configured to certify provenance of the digital data from the integrated circuit (1),
providing (S3) the digital data and the signature of the digital data on a digital interface (16) of the integrated circuit (1).

15. The method according to claim 14, wherein the signature is generated by applying a one-way function to a combination of the digital data and a secret message.
